# EUROPÄISCHE PATENTSCHRIFT

(11) **EP 0 740 057 B1**
(45) Veröffentlichungstag und Bekanntmachung des Hinweises auf die Patenterteilung: **04.10.2001**
(21) Anmeldenummer: 96810230.1
(22) Anmeldetag: 12.04.1996
(51) Int. Cl.: F02C 6/00, F02C 7/26

(54) **Verfahren zum Starten einer sequentiell befeuerten Gasturbogruppe**
Method for starting a gas turbine with sequential combustion
Méthode de démarrage d'une turbine à gaz avec combustion séquentielle

(30) Priorität: 24.04.1995 DE 19514991
(43) Veröffentlichungstag der Anmeldung: 30.10.1996
(73) Patentinhaber: ASEA BROWN BOVERI AG, 5400 Baden (CH)
(72) Erfinder: Farkas, Franz, 8003 Zürich (CH); Rufli, Peter, Dr., 5442 Fislisbach (CH)

(56) Entgegenhaltungen:
- EP-A- 0 515 746
- US-A- 3 470 691
- US-A- 4 206 593
- US-A- 4 270 344
- US-A- 5 301 500
- PATENT ABSTRACTS OF JAPAN vol. 018, no. 432 (M-1654), 11. August 1994 & JP 06 129264 A (NISSAN MOTOR CO LTD), 10. Mai 1994

## Beschreibung

### Technisches Gebiet

Die vorliegende Erfindung betrifft ein Verfahren gemäss Oberbegriff des Anspruchs 1.

### Stand der Technik

Zur Regelung des ganzen Betriebsverhaltens bei einer sequentiell befeuerten Gasturbogruppe, welche im wesentlichen aus einer Verdichtereinheit, einer Hochdruck- und einer Niederdruckbrennkammer und einer Hochdruck- und Niederdruckturbine besteht, ist bekanntgeworden, die signifikanten Temperaturen an verschiedenen Stellen der Gasturbogruppe abzunehmen und dementsprechend auf die Fahrweise einzuwirken. Eine regelbedingte Zumessung der beiden Brennstoffmengen für die Brennkammern müsste so erfolgen, dass mindestens die Austrittstemperatur der Heissgase der jeweiligen Brennkammer direkt erfasst werden müsste. Eine solche Temperaturerfassung ist indessen schwierig zu bewerkstelligen, ihre Reproduzierbarkeit ist nicht gesichert, so dass eine sichere Fahrweise anhand einer Brennstoffregulierung, welche auf nicht gesicherten Messungen basiert, nicht zu gewährleisten ist. Zwar ist es richtig, dass die Fahrweise auch anhand anderer betriebsmässiger Parameter, die hilfsweise einbezogen werden könnten, abzustützen wäre, indessen ist auch hier immer noch vonnöten, auf die Temperaturen einzuwirken, infolgedessen stützt sich die Regulierung auch hier ausschliesslich auf eine dynamische Brennstoffzumessung, die unbestritten schwer zu realisieren ist.

### Darstellung der Erfindung

Hier will die Erfindung Abhilfe schaffen. Der Erfindung, wie sie in den Ansprüchen gekennzeichnet ist, liegt die Aufgabe zugrunde, bei einem Verfahren der eingangs genannten Art sämtliche Betriebspunkte der Gasturbogruppe nach einem sicheren Regelungskonzept anzusteuern, sowohl bei Inbetriebsetzung als auch bei Ausserbetriebsetzung.

Der wesentliche Vorteil der Erfindung ist darin zu sehen, dass der Eingriff auf alle Betriebszustände der Gasturbogruppe mit mindestens einer Vorleitreihe im Kompressor erfolgt, die eine multifunktionale Wirkung auf die Fahrweise der Gasturbogruppe in beiden Fahrtrichtungen ausübt.

Vorteilhafte und zweckmässige Weiterbildungen der erfindungsgemässen Aufgabenlösung sind in den weiteren abhängigen Ansprüchen gekennzeichnet.

Im folgenden wird anhand der Zeichnungen ein Ausführungsbeispiel der Erfindung näher erläutert. Alle für das unmittelbare Verständnis der Erfindung nicht erforderlichen Merkmale sind fortgelassen. Die Strömungsrichtung der Medien ist mit Pfeilen angegeben. Gleiche Elemente sind in den verschiedenen Figuren mit den gleichen Bezugszeichen versehen.

### Kurze Beschreibung der Zeichnungen

Es zeigt:
- Fig. 1: ein Schema einer Gasturbogruppe mit sequentieller Befeuerung und
- Fig. 2: ein Regelungsdiagramm über den Verlauf der Last in Abhängigkeit zur Vestellung der Vorleitreihe im Kompressor.

### Wege zur Ausführung der Erfindung, gewerbliche Verwertbarkeit

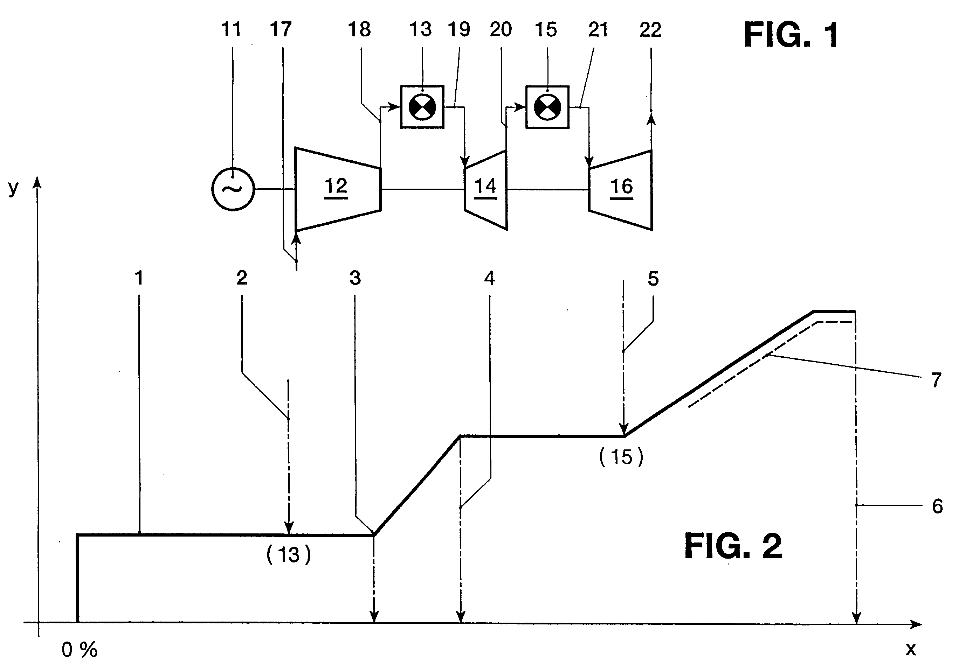

Die Figuren 1 und 2 werden in der nachfolgenden Beschreibung gleichzeitig in beliebiger Reihenfolge herangezogen.

Fig. 2 zeigt ein Diagramm, worin Inbetriebsetzung, Lastbetrieb und Teillastbetrieb einer Gasturbogruppe gemäss Fig. 1 dargestellt sind. Die Abszisse X versinnbildlicht die Last in %, während die Ordinate Y die qualitative Verstellung der Vorleitreihe im Verdichter 12 angibt. Es gilt als zugrundegelegt, dass diese Gasturbogruppe gemäss Fig. 1 aus einer Verdichtereinheit 12 besteht, in welcher die Kompression der angesaugten Luft 17 stattfindet. Die verdichtete Luft 18 strömt sodann in eine erste Brennkammer 13, in welcher vorzugsweise durch den Einsatz von Vormischbrennern, wie dies aus EP-B1-0 321 809 hervorgeht, wobei die Lehre aus dieser Druckschrift intergrierender Bestandteil dieser Ausführung ist, Heissgase bereitgestellt werden. Diese Heissgase 19 beaufschlagen dann eine erste Turbine 14, welche lediglich auf Teilentspannung ausgelegt ist, dergestalt, dass die daraus abströmenden Abgase 20 noch eine relativ hohe Temperatur aufweisen. Diese Abgase 20 strömen dann in eine zweite Brennkammer 15, in welcher durch den dort eingedüsten Brennstoff eine Zündung iniziert wird, womit wiederum Heissgase 21 in nämlicher kalorischer Stufe zur Beaufschlagung einer nachgeschalteten zweiten Turbine 16 bereitgestellt werden. Das kalorische Restpotential der Abgase 22 aus der zweiten Turbine 16 wird vorzugsweise zur Dampferzeugung entweder für eine Rückführung dieses Dampfes in die Gasturbogruppe (STIG-Betrieb) oder zum Betrieb eines nachgeschalteten Dampfkreislaufes eingesetzt. Da es sich vorliegend um eine einwellige Maschine handelt, kann die Energieumwandlung durch einen einzigen Generator 11 erfolgen.

Beim Starten 1 gemäss Fig. 2 wird die Gasturbogruppe mit stark zugemachter Vorleitreihe angefahren. Mit dieser Vorkehrung werden insbesondere der Massenstrom, also die angesaugte Luft 17, die Anwurfleistung und die Biegewechselbeanspruchungen der Schaufeln reduziert. Mithin wird während dieser Startphase die potentiell enstehenden "Rotating-Stall-Zellen"-Zellen" im Kompressor 12 vermieden. Der richtige Zündzustand 2 für die zuerst in Betrieb zu nehmende erste Brennkammer 13, der vom richtigen Luft/Brennstoff-Verhältnis abhängig ist, wird bei erreichter Zünddrehzahl mit Hilfe einer entsprechenden korrigierten Verstellung der Vorleitreihe angepeilt, deren Mass die Pumpgrenze des Kompressors 12 darstellt. Die Verstellung der Vorleitreihe macht nach erfolgter Zündung 2 der ersten Brennkammer 13 die Kompressormenge sowohl für eine Ansteuerung des Teillastbetriebes als auch für den Vollastbetrieb selbst wählbar. Auf den Teillastbetrieb wird weiter unten näher eingegangen. Nach der Zündung 2 der ersten Brennkammer 13 wird die Stellung der Vorleitreihe kurz konstant gehalten, wie dies aus Fig. 2 hervorgeht. Unmittelbar danach wird durch eine weitere Oeffnung der Vorleitreihe die Drehzahl auf Leerlauf 4, nämlich auf 100% der Nenndrehzahl bei Null Last, gesteigert, um dann bis zu tiefer Teillast (ca. 50% der Vollast) konstant zu bleiben. Auf diesem Niveau erfolgt sodann die Zündung 5 der zweiten Brennkammer 15. Bei gleichbleibender Drehzahl wird die Last der Gasturbogruppe durch eine weitere öffnende Verstellung der Vorleitreihe sukzessiv auf Vollast 6 gesteigert, wobei die Vorleitreihe mit einer gewissen Verstellreserve ausgestattet ist. Anhand der angesteuerten Stellung der Vorleitreihe erfolgt die Zündung der zweiten Brennkammer 15 im richtigen Zeitpunkt. Die Verstellung der Vorleitreihe ermöglicht, dass nach erfolgter Zündung 5 die Menge verdichteter Luft 18 aus dem Kompressor 12 sowohl für eine Ansteuerung des Teillastbetriebes als auch für den Vollastbetrieb zu bestimmen ist. Was die Erstellung des Teillastbetriebes 7 anbelangt, wird dies durch eine entsprechende Kombination zwischen Verstellung der Vorleitreihe und entsprechender Rücknahme der Brennstoffmenge in die zweite Brennkammer 15 erzielt. Durch diese Kombination ist es im Teillastbetrieb möglich, die Temperatur und den Wirkungsgrad so zu optimieren, dass sowohl im Einzelbetrieb der Gasturbogruppe als auch im STIG-Betrieb oder Kombibetrieb jene erwünschte Temperatur der Abgase 22 aus der zweiten Turbine 16 aufrechterhalten werden kann. Durch die bereits genannte Luftreserve bei Vollast aus der Verstellbarkeit der Vorleitreihe ist es möglich, eine Flexibilität verschiedener Garantiedaten zu erreichen. Durch die grosse Verstell-Spannbreite der Vorleitreihe kann ein "gefeuertes Abstellen" vermieden werden. Im Leerlauf 4 wird ein Brennstoff-Schnellschluss eingeleitet, was bewirkt, dass die Maschine mit offenen Ausblasventilen und relativ stark geschlossener Vorleitreihe auslaufen kann. Durch diese Drosselung der Luftstrommenge wird eine schnelle Abkühlung der Maschine, welche zu einem Thermoschock und zu Verbiegungen führen kann, vermieden. Ab einer festgelegten Minimal-Drehzahl im Nachgang des Brennstoff-Schnellschlusses wird die Vorleitreihe gänzlich geschlossen, d.h. Metall auf Metall gefahren, wodurch eine weitere Drosselung und Wärmekonservierung der Maschine erreicht werden. Durch diese Massnahmen werden die stark beanspruchten Teile gewichtig geschont, dergestalt, dass sich dank des grossen Verstell-Potentials der hier gewürdigten Vorleitreihe weniger volle Thermozyklen resultieren als sonst üblich. Im Stillstand wird die Maschine sodann durch die ganz zugemachte Vorleitreihe warm gehalten und demnach konserviert, in dem Sinne, als sie im Stillstand praktisch keinem Durchzug ausgesetzt ist. Danebst wirkt diese Wärmekonservierung stark gegen eine Korrosion aus einer allfälligen Kondensation in den Strömungssystemen. Diese Vorteile machen sich des weiteren immer dann besonders bemerkbar, wenn die Maschine oft bereits nach kurzer Ausserbetriebssetzung wieder gestartet werden muss, womit sie thermozyklisch gewichtig geschont werden kann.

### Bezugszeichenliste

- 1: Starten
- 2: Zündung der ersten Brennkammer
- 3: Stellung der Vorleitreihe
- 4: Leerlauf mit Drehzahl 100%
- 5: Zündung der zweiten Brennkammer
- 6: Vollast
- 7: Teillastbetrieb
- 11: Generator
- 12: Verdichter, Kompressor
- 13: Erste Brennkammer
- 14: Erste Turbine
- 15: Zweite Brennkammer
- 16: Zweite Turbine
- 17: Angesaugte Luft
- 18: Verdichtete Luft
- 19: Heissgase aus der ersten Brennkammer
- 20: Abgase aus der ersten Turbine
- 21: Heissgase aus der zweiten Brennkammer
- 22: Abgase aus der zweiten Turbine
- X: Last in %
- Y: Oeffnung der Vorleitreihe (qualitativ)

## Patentansprüche

1. Verfahren zum Betrieb einer sequentiell befeuerten Gasturbogruppe, im wesentlichen bestehend aus einer Verdichtereinheit, einer der Verdichtereinheit nachgeschalteten ersten Brennkammer, deren Heissgase eine nachgeschaltete erste Turbine beaufschlagen, einer der ersten Turbine nachgeschalteten zweiten Brennkammer, deren Heissgase eine zweite nachgeschaltete Turbine beaufschlagen, und aus mindestens einem Generator, **dadurch gekennzeichnet, dass** beim Starten (1) mindestens eine Vorleitreihe im Kompressor (12) bis maximal bis zur Pumpgrenze desselben geöffnet werden, **dass** unterhalb der Nenndrehzahl im Leerlauf (4) der Gasturbogruppe bei gleichbleibender Oeffnung der Vorleitreihe die Zündung (2) der ersten Brennkammer (13) erfolgt, **dass** nach der Zündung (2) der ersten Brennkammer (13) die Vorleitreihe weiter geöffnet wird, bis die Nenndrehzahl im Leerlauf (4) erreicht wird, **dass** während des Betriebes bei dieser Nenndrehzahl und bei gleichbleibender Oeffnung der Vorleitreihe die Zündung (5) der zweiten Brennkammer (15) erfolgt, und **dass** anschliessend bei konstanter Nenndrehzahl die Vorleitreihe sukzessiv bis zum Erreichen der Vollast (6) der Gasturbogruppe geöffnet wird.

2. Verfahren nach Anspruch 1, **dadurch gekennzeichnet, dass** ein Teillastbetrieb (7) gleichzeitig durch Zurücknahme der Brennstoffmenge in die zweite Brennkammer (15) und Schliessen der Vorleitreihe im Kompressor (12) erfolgt.

3. Verfahren nach Anspruch 2, **dadurch gekennzeichnet, dass** bei Kombibetrieb die Temperatur der Abgase (22) aus der zweiten Turbine (16) durch Regelung der Vorleitreihe im Kompressor (12) auf Niveau gehalten wird.

## Claims

1. Method of operating a sequentially fired gas-turbine group, essentially comprising a compressor unit, a first combustion chamber which is arranged downstream of the compressor unit and whose hot gases are admitted to a first turbine arranged downstream, a second combustion chamber which is arranged downstream of the first turbine and whose hot gases are admitted to a second turbine arranged downstream, and at least one generator, **characterized in that**, during starting (1), at least one inlet guide row in the compressor (12) is opened up to a maximum up to the pumping limit of the same, **in that** the ignition (2) of the first combustion chamber (13) takes place below the rated speed during idling (4) of the gas-turbine group with the opening of the inlet guide row remaining constant, **in that**, after the ignition (2) of the first combustion chamber (13), the inlet guide row is opened further until the rated speed is reached during idling (4), **in that** the ignition (5) of the second combustion chamber (15) takes place during operation at this rated speed and with the opening of the inlet guide row remaining constant, and **in that** the inlet guide row is then opened successively at constant rated speed until full load (6) of the gas-turbine group is reached.

2. Method according to Claim 1, **characterized in that** part-load operation (7) is effected simultaneously by throttling back the fuel quantity to the second combustion chamber (15) and closing the inlet guide row in the compressor (12).

3. Method according to Claim 2, **characterized in that**, in combined cycle operation, the temperature of the exhaust gases (22) from the second turbine (16) is kept level by regulating the inlet guide row in the compressor (12).

## Revendications

1. Procédé d'utilisation d'un groupe turbine à gaz à combustion séquentielle, essentiellement constitué d'une unité de compresseur, d'une première chambre de combustion située en aval de l'unité de compresseur et dont les gaz chauds alimentent une première turbine située en aval, d'une deuxième chambre de combustion située en aval de la première turbine et dont les gaz chauds alimentent une deuxième turbine située en aval et d'au moins un générateur, **caractérisé en ce qu'**au démarrage (1), au moins une série d'aubes d'entrée du compresseur (12) est ouverte au maximum jusqu'à la limite de pompage du compresseur, **en ce que** l'allumage (2) de la première chambre de combustion (13) a lieu en dessous de la vitesse de rotation nominale à vide (4) du groupe turbine à gaz, à ouverture constante de la série d'aubes d'entrée, **en ce qu'**après l'allumage (2) de la première chambre de combustion (13), la série d'aubes d'entrée est ouverte plus largement jusqu'à ce que la vitesse de rotation nominale à vide (4) soit atteinte, **en ce que** l'allumage (5) de la deuxième chambre de combustion (15) a lieu pendant le fonctionnement à cette vitesse de rotation nominale et à ouverture constante de la série d'aubes d'entrée, et **en ce qu'**ensuite, à vitesse de rotation nominale constante, la série d'aubes d'entrée est ouverte progressivement jusqu'à atteindre la pleine charge (6) du groupe turbine à gaz.

2. Procédé selon la revendication 1, **caractérisé en ce qu'**un fonctionnement à charge partielle (7) s'obtient en même temps par diminution de la quantité de combustible dans la deuxième chambre de combustion (15) et fermeture de la série d'aubes d'entrée du compresseur (12).

3. Procédé selon la revendication 2, **caractérisé en ce qu'**en fonctionnement combiné, la température des gaz d'échappement (22) sortant de la deuxième turbine (16) est maintenue à niveau par régulation de la série d'aubes d'entrée du compresseur (12).
